# EUROPÄISCHE PATENTSCHRIFT

(11) **EP 2 722 124 B1**
(45) Veröffentlichungstag und Bekanntmachung des Hinweises auf die Patenterteilung: **11.12.2019**
(21) Anmeldenummer: 13187477.8
(22) Anmeldetag: 07.10.2013
(51) Int. Cl.: B23K 11/00, B23K 103/16, B23K 11/11

(54) **Verfahren zum Fügen von wenigstens zwei Bauteilen mit einem Widerstandsschweißelement, sowie Vorrichtung zur Durchführung des Verfahrens und hiermit hergestellter Bauteilverbund**
Method for joining at least two components with a resistance welding element, and device for carrying out the method and resulting composite component
Procédé d'assemblage d'au moins deux composants à l'aide d'un élément de soudage par résistance et dispositif permettant de mettre en oeuvre le procédé, ainsi que composant ainsi fabriqué

(30) Priorität: 16.10.2012 DE 102012020222
(43) Veröffentlichungstag der Anmeldung: 23.04.2014
(73) Patentinhaber: Volkswagen Aktiengesellschaft, 38440 Wolfsburg (DE)
(72) Erfinder: Amedick, Jürgen, 31228 Peine (DE); Rudolf, Dr. Heiko, 38556 Bokensdorf (DE); Plath, Dr. Armin, 84028 Landshut (DE); Wiethop, Philipp, 38116 Braunschweig (DE)

(56) Entgegenhaltungen:
- EP-A1- 2 127 797
- EP-A1- 2 722 124
- EP-A2- 1 138 430
- US-A1- 2005 161 965

## Beschreibung

Die Erfindung betrifft ein Verfahren und eine Vorrichtung zum Fügen von wenigstens zwei Bauteilen mittels wenigstens eines Widerstandsschweißelements bzw. zum Fügen von wenigstens zwei Bauteilen durch Widerstandsschweißen unter Einsatz wenigstens eines Widerstandsschweißelements.

Die Erfindung betrifft ferner einen mit einem solchen Verfahren und/oder einer solchen Vorrichtung hergestellten Bauteilverbund.

Verfahren und Vorrichtungen zum Fügen von Bauteilen durch Widerstandsschweißen unter Einsatz eines Widerstandsschweißelements sind aus dem Stand der Technik bekannt. Stellvertretend wird auf die Patentschriften DE 100 15 713 A1, DE 10 2004 025 492 A1 und DE 10 2007 036 416 A1 hingewiesen. Dokumente EP-A-1 138 430 und EP-A-2 127 797, die als nächster Stand der Technik angesehen werden, offenbaren Verfahren zum Fügen von wenigstens zwei Bauteilen, wobei der Schaftabschnitt der Niete nach dem Befestigen des Schaftabschnitts der Niete am zweiten Bauteil aus dem zweiten Bauteil überragt.

Die vorbekannten Verfahren weisen jedoch diverse Nachteile und Einschränkungen auf.

Der Erfindung liegt daher die Aufgabe zugrunde, ein Verfahren und eine Vorrichtung der eingangs genannten Art anzugeben, die die mit dem Stand der Technik einhergehenden Nachteile nicht oder zumindest nur in einem verminderten Umfang aufweisen.

Diese Aufgabe wird gelöst durch ein erfindungsgemäßes Verfahren mit den Merkmalen des Anspruchs 1.

Bevorzugte Weiterbildungen und Ausgestaltungen ergeben sich analog für alle Erfindungsgegenstände sowohl aus den abhängigen Ansprüchen als auch aus den nachfolgenden Erläuterungen.

Das erfindungsgemäße Verfahren zum Fügen von wenigstens zwei Bauteilen mittels wenigstens eines Widerstandsschweißelements bzw. zum Fügen von wenigstens zwei Bauteilen durch Widerstandsschweißen unter Einsatz (bzw. Verwendung) wenigstens eines Widerstandsschweißelements umfasst zumindest die im Anspruch 1 beschriebenen Verfahrensschritte.

Das erfindungsgemäße Verfahren kann weitere hierin nicht näher erläuterte Verfahrensschritte, Teilschritte und/oder Zwischenschritte umfassen.

Das verwendete Widerstandsschweißelement bzw. Fügehilfselement weist einen Schaftabschnitt und einen Kopfabschnitt auf, wobei der Schaftabschnitt insbesondere dafür vorgesehen ist, derart mit dem zweiten Bauteil form- und/oder kraftschlüssig verbunden zu werden, dass das Widerstandsschweißelement fest und dauerhaft mit dem zweiten Bauteil verbunden ist. Dieses Verbinden mit dem zweiten Bauteil bzw. Befestigen am zweiten Bauteil erfolgt insbesondere mechanisch, bspw. durch Eintreiben, Einstanzen oder dergleichen. Bevorzugt ist vorgesehen, dass das Widerstandsschweißelement einteilig und einstückig ausgebildet ist und eine axiale Längserstreckung aufweist, wobei insbesondere vorgesehen ist, dass der Kopfabschnitt in einer Richtung quer zur Längserstreckung (bzw. in radialer Richtung) den Schaftabschnitt überragt. Das Widerstandsschweißelement ist bspw. aus einem Metallwerkstoff und insbesondere aus einem Stahlwerkstoff gebildet. Das Widerstandsschweißelement kann aber auch aus unterschiedlichen Werkstoffen gebildet sein; so kann bspw. vorgesehen sein, dass der Schaftabschnitt und der Kopfabschnitt aus unterschiedlichen Werkstoffen mit unterschiedlichen Eigenschaften gebildet sind. Nachdem das Widerstandsschweißelement mit dem zweiten Bauteil verbunden ist wird das erste Bauteil mit dem zweiten Bauteil verbunden, wozu das erste Bauteil derart relativ zum zweiten Bauteil positioniert wird, dass der Kopfabschnitt des Widerstandsschweißelements dem ersten Bauteil zugewandt ist bzw. zwischen den Bauteilen angeordnet ist und anschließend das erste Bauteil durch Widerstandsschweißen mit dem Kopfabschnitt des Widerstandsschweißelements fest und dauerhaft verbunden wird, wodurch eine feste und dauerhafte Verbindung zwischen den Bauteilen herbeigeführt wird. Das Widerstandsschweißelement oder zumindest dessen Kopfabschnitt weist daher insbesondere eine Widerstandsschweißeignung bezüglich des ersten Bauteils auf, was bspw. durch entsprechende Werkstoffauswahl bzw. Werkstoffkombination im Hinblick auf den Werkstoff des ersten Bauteils bewerkstelligt wird. Zur Erzielung bestimmter Eigenschaften kann das Widerstandsschweißelement zumindest teilweise mit einer Beschichtung versehen sein.

Zum Widerstandsschweißen werden die beiden Bauteile an der Fügestelle mit Elektroden einer Widerstandsschweißeinrichtung mehr oder weniger stark zusammengedrückt. Durch einen über die Elektroden zu- und abgeführten und durch das Widerstandsschweißelement hindurch geleiteten elektrischen Strom bzw. Schweißstrom wird der Werkstoff des Widerstandsschweißelements und/oder des ersten Bauteils (auf der dem Widerstandsschweißelement zugewandten Seite) bis zum Aufschmelzen erhitzt. Nach Beendigung des Stromflusses entsteht durch Wiedererstarrung der Schmelze bzw. der Schmelzen eine feste und dauerhafte Schweißverbindung zwischen dem fest mit dem zweiten Bauteil verbundenen Widerstandsschweißelement und dem ersten Bauteil. Durch das Zusammendrücken der Bauteile während und nach dem Stromfluss (was auch als Widerstandspressschweißen oder Widerstandspunktschweißen bezeichnet werden kann) wird die Ausbildung einer besonders belastungsfähigen Schweißverbindung zwischen den Bauteilen begünstigt.

Eine wesentliche Idee der Erfindung ist darin zu sehen, dass das an einem der Bauteile befestigte Widerstandsschweißelement nicht schaftseitig (wie bei dem eingangs genannten Stand der Technik), sondern kopfseitig mit dem anderen Bauteil durch Widerstandsschweißen verbunden wird, so dass sich der verschweißte Kopfabschnitt unsichtbar zwischen den gefügten bzw. miteinander verbundenen Bauteilen befindet. Somit steht der Kopfabschnitt an der Fügestelle nicht über bzw. ragt an der Fügestelle nicht aus einem der Bauteile heraus, was zumeist störend und auch hinsichtlich der Dichtigkeit kritisch ist.

Das erfindungsgemäße Verfahren umfasst somit zwei einzelne Fügeprozesse: ein insbesondere mechanisches Fügen zum Verbinden des Widerstandsschweißelements mit dem zweiten Bauteil und ein Widerstandsschweißen zum Fügen bzw. Verbinden der beiden Bauteile. Das Verbinden des Widerstandsschweißelements mit dem zweiten Bauteil kann als Hilfsfügeprozess oder als Primärfügeprozess aufgefasst werden. Das (insbesondere konventionelle) Widerstandsschweißen kann als Hauptfügeprozess oder als Sekundärfügeprozess aufgefasst werden. Die einzelnen Fügeprozesse können zeitlich und/oder räumlich getrennt ausgeführt werden. Bspw. ist denkbar, dass das Verbinden eines oder mehrerer Widerstandsschweißelemente mit dem zweiten Bauteil bei einem Zulieferer erfolgt. Die hergestellte Verbindung ist dauerhaft und somit transport- und lagersicher.

Die zu fügenden Bauteile können mit einem einzelnen Widerstandsschweißelement in der zuvor erläuterten Weise miteinander gefügt werden. Bevorzugt ist jedoch vorgesehen, dass die zu fügenden Bauteile mit mehreren Widerstandsschweißelementen in der zuvor erläuterten Weise miteinander gefügt werden, so dass ein derart hergestellter Bauteilverbund bzw. Schweißverbund eine Vielzahl von Fügestellen aufweist.

Vorzugsweise ist zumindest eines und insbesondere sind beide der zu fügenden Bauteile aus einem blechähnlichen Halbzeug bzw. Flachmaterial gebildet. Bevorzugt ist vorgesehen, dass die Bauteile aus unterschiedlichen Metallwerkstoffen (bspw. Stahllegierung 1 - Stahllegierung 2) und insbesondere aus artfremden Metallwerkstoffen (bspw. Stahl - Aluminium, Stahl - Magnesium, Stahl - Titan und usw.) gebildet sind. Während vorzugsweise vorgesehen ist, dass das erste Bauteil aus einem metallischen Werkstoff und insbesondere aus einem Blechmaterial (besonders bevorzugt einem Stahlblechmaterial) gebildet ist, kann insbesondere vorgesehen sein, dass das zweite Bauteil aus einem nicht-metallischen Werkstoff, wie bspw. einem Kunststoff- oder Kunststoffverbund-Flachmaterial und insbesondere einem CFK-Flachmaterial, gebildet ist.

Bei den zu fügenden Bauteilen handelt es sich insbesondere um Karosseriebauteile, so dass das erfindungsgemäße Verfahren insbesondere der Herstellung einer Fahrzeugkarosserie, vorzugsweise für einen Personenkraftwagen, dient.

Bevorzugt ist vorgesehen, dass der Kopfabschnitt des Widerstandsschweißelements nach dem Verbinden mit dem zweiten Bauteil vom diesem übersteht bzw. an der Fügestelle vom zweiten Bauteil abragt und insbesondere in Richtung des ersten Bauteils vorragt. Der Kopfabschnitt des Widerstandsschweißelements kann z. B. auch mit einer Erhöhung wie bspw. einem spitzen, konischen oder trapezförmigen Buckel oder dergleichen ausgebildet sein. Durch die resultierende Stromdichte (bzw. Stromkonzentration) beim Widerstandsschweißen wird ein schneller und sicherer Schweißprozess zwischen dem Kopfabschnitt des Widerstandsschweißelements und dem ersten Bauteil gewährleistet.

Bevorzugt ist auch vorgesehen, dass der Schaftabschnitt des Widerstandsschweißelements nach dem Verbinden mit dem zweiten Bauteil nicht aus diesem herausragt bzw. nicht das zweite Bauteil durchstreckt und an der vom Kopfabschnitt abgewandten Seite (Außenseite) nicht vom zweiten Bauteil übersteht. D. h. der Schaftabschnitt des mit dem zweiten Bauteil verbundenen Widerstandsschweißelements durchdringt nicht das zweite Bauteil. Dadurch wird die Dichtheit an der Fügestelle gewährleistet und die Korrosionsbeständigkeit verbessert. Gegebenfalls zeichnet sich der Schaftabschnitt auf der vom Kopfabschnitt abgewandten Seite des zweiten Bauteils ab (wie nachfolgend noch näher erläutert), wobei ebenso vorgesehen sein kann, dass sich der Schaftabschnitt des zweiten Bauteils nicht abzeichnet.

Die zu fügenden Bauteile können zumindest an der Fügestelle bzw. im Bereich des Widerstandsschweißelements auch miteinander verklebt werden. Das Verkleben erfolgt insbesondere flächig an den einander zugewandten Flächen der Bauteile. Das Verkleben und das Verschweißen mittels des Widerstandsschweißelements ergänzen sich hierbei. Besonders bevorzugt ist vorgesehen, dass das Verschweißen mittels des Widerstandsschweißelements zum Fixieren der Bauteile dient, bis ein zwischen den Bauteilen befindlicher Klebstoff ausgehärtet ist (so genanntes Punktschweißkleben). Durch das Verkleben in Kombination mit dem Verschweißen können z. B. sehr belastbare und crashsichere Fahrzeugkarosseriestrukturen hergestellt werden.

Ferner ist bevorzugt vorgesehen, dass sich beim Widerstandsschweißen eine Schweißlinse zwischen den Bauteilen ausbildet und zwar insbesondere derart, dass diese Schweißlinse zwischen dem ersten Bauteil und dem Widerstandsschweißelement (bzw. dessen Kopfabschnitt) entsteht bzw. gebildet wird. Unter einer Schweißlinse wird insbesondere eine linsenförmige Erstarrung der Schmelze bzw. der Schmelzen an der Fügestelle verstanden. Insbesondere bildet sich die Schweißlinse durch Aufschmelzen und Erstarren des Werkstoffs des Widerstandsschweißelements aus. Besonders bevorzugt ist vorgesehen, dass sich diese Schweißlinse an ihrer dem ersten Bauteil zugewandten Randschicht stoffschlüssig mit dem Werkstoff des ersten Bauteils verbindet bzw. verbunden hat. Bevorzugter Weise zeichnet sich die quasi versteckt zwischen den gefügten Bauteilen befindliche Schweißlinse weder an der Außenseiten des ersten Bauteils noch an der Außenseite des zweiten Bauteils ab.

Besonders bevorzugt ist vorgesehen, dass das Widerstandsschweißelement ein selbststanzendes Widerstandsschweißelement ist, wozu insbesondere dessen Schaftabschnitt entsprechend ausgebildet ist. Das Widerstandsschweißelement kann somit ohne Vorbohren mit dem zweiten Bauteil gefügt werden, wie nachfolgend noch näher erläutert.

In bevorzugter Weise ist das erste Bauteil aus einem hochfesten und vorzugsweise pressgehärteten Stahlblechmaterial gebildet und weist insbesondere auch eine metallische Korrosionsschutzbeschichtung auf. Ein hochfestes Stahlblechmaterial weist eine Zugfestigkeit von mindestens 1000 MPa oder mehr auf. Bei der metallischen Korrosionsschutzbeschichtung handelt es sich insbesondere um eine zink- oder aluminiumbasierte (bspw. FeAlSi-) Beschichtung, die vorzugsweise beidseitig und vollflächig aufgebracht ist.

Gemäß einer bevorzugten Weiterbildung ist vorgesehen, dass mehr als zwei Bauteile gefügt werden, wozu zunächst das zweite Bauteil mittels des Widerstandsschweißelements mit wenigstens einem weiteren Bauteil zu einem Vorverbund gefügt wird (was insbesondere durch form- und/oder kraftschlüssiges Befestigen des Schaftabschnitts an den Bauteilen erfolgt) und nachfolgend das erste Bauteil mit dem Vorverbund verbunden wird, wozu das erste Bauteil derart zum Vorverbund positioniert wird, dass der Kopfabschnitt des am Vorverbund befestigten Widerstandsschweißelements dem ersten Bauteil zugewandt ist und anschließend das erste Bauteil durch Widerstandsschweißen mit dem Kopfabschnitt des Widerstandsschweißelements verbunden wird (was analog zu den vorausgehenden Erläuterungen erfolgt). Besonders bevorzugt ist hierbei vorgesehen, dass der Schaftabschnitt des Widerstandsschweißelements nach dem Verbinden mit dem zweiten und wenigstens einem weiteren Bauteil nicht aus Vorverbund herausragt. Diesbezüglich wird im Weiteren auf die diesbezüglichen obenstehenden Erläuterungen verwiesen, die analog gelten.

Die Vorrichtung zur Durchführung des erfindungsgemäßen Verfahrens umfasst zumindest eine Stanzeinrichtung zum Einbringen des Widerstandsschweißelements (bzw. mehrerer Widerstandsschweißelemente) und eine Widerstandsschweißeinrichtung zum Widerstandsschweißen. Bevorzugt ist vorgesehen, dass die Stanzeinrichtung einen Stempel und eine korrespondierende Matrize aufweist, wobei die Matrize insbesondere auch mit einer Stanzbutzenabführung ausgebildet sein kann, und/oder dass die Widerstandsschweißeinrichtung zwei Elektroden aufweist, mit denen an einer Fügestelle ein Schweißstrom durch die Bauteile und das dazwischen befindliche Widerstandsschweißelement geführt werden kann.

Ein Bauteilverbund, der mit einem erfindungsgemäßen Verfahren und/oder mit einer erfindungsgemäßen Vorrichtung hergestellt ist, umfasst wenigstens zwei Bauteile, wobei die Bauteile an wenigstens einer Fügestelle mit einem Widerstandsschweißelement verbunden sind, derart, dass das Widerstandsschweißelement form- und/oder kraftschlüssig mit dem zweiten Bauteil (und gegebenenfalls weiteren Bauteilen) und stoffschlüssig (durch Widerstandsverschweißung) mit dem ersten Bauteil verbunden ist, wodurch zwischen den beiden Bauteilen eine feste und dauerhafte Verbindung besteht.

Das erste Bauteil ist vorzugsweise aus einem Stahlwerkstoff und insbesondere aus einem Stahlblechmaterial gebildet. Besonders bevorzugt ist vorgesehen, dass das erste Bauteil aus einem pressgehärteten Stahlblechmaterial gebildet und beschichtet ist. Das Widerstandsschweißelement ist vorzugsweise ebenfalls aus einem Stahlwerkstoff gebildet. Das zweite Bauteil kann aus einem artfremden Metallwerkstoff (bspw. einem Aluminium-, Magnesium- oder Titanwerkstoff) gebildet sein, so dass es sich bei dem Bauteilverbund um eine so genannte Metallmischverbindung handelt. Das zweite Bauteil kann auch aus einem nicht-metallischen Werkstoff, wie bspw. einen faserverstärkten Kunststoff, gebildet sein, so dass es sich bei dem Bauteilverbund um eine so genannte Mischverbindung handelt.

Die Erfindung wird nachfolgend beispielhaft und in nicht einschränkender Weise mit Bezug auf die einzige nicht maßstabsgerechte Figur näher erläutert. Die in der Figur gezeigten und/oder nachfolgend erläuterten Merkmale können jedoch, unabhängig von konkreten Merkmalskombinationen, allgemeine Merkmale der Erfindung sein.

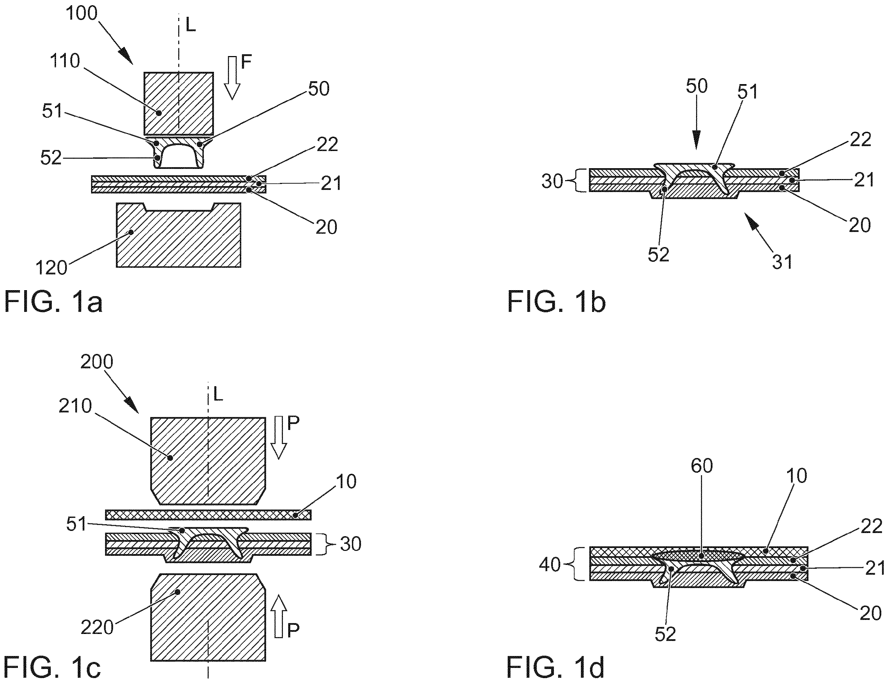

- Fig. 1: zeigt in vier schematischen Schnittdarstellungen einen erfindungsgemäßen Verfahrensablauf zum Fügen mehrerer Bauteile.

Fig. 1a zeigt eine Stanzeinrichtung 100. Die Stanzeinrichtung 100 umfasst einen Stempel 110 und eine korrespondierende Matrize 120. Die Stanzeinrichtung 100 kann ferner einen nicht gezeigten Niederhalter aufweisen, der den Stempel 110 zumindest teilweise umschließt.

Zwischen dem Stempel 110 und der Matrize 120 sind mehrere blechähnliche Bauteile 20, 21 und 22 positioniert, wobei diese Bauteile aus verschiedenen Werkstoffen gebildet sein können. Bei dem zweiten untersten Bauteil 20 handelt es sich beispielhaft um ein Werkstück aus einem Aluminiumblech (bspw. EN AW 5754). Das dritte mittlere Bauteil 21 und das vierte obere Bauteil 22 können aus metallischen Werkstoffen, wie bspw. Stahl oder Aluminium, oder aus nicht-metallischen Werkstoffen, wie bspw. einem faserverstärkten Kunststoff (FVK), gebildet sein. Das vierte obere Bauteil 22 kann auch als Deckblech bezeichnet werden. Anstelle der gezeigten drei Bauteile 20, 21 und 22 kann auch nur ein einzelnes zweites Bauteil 20 vorgesehen sein, wofür die nachfolgenden Erläuterungen gleichermaßen gelten.

Zunächst sollen die Bauteile 20, 21 und 22 mittels eines Widerstandsschweißelements 50 zu einem Vorverbund 30 gefügt werden. Das einteilig, einstückig und rotationssymmetrisch ausgebildete Widerstandsschweißelement 50 weist einen Kopfabschnitt 51 und einen Schaftabschnitt 52 auf, wobei der Kopfabschnitt 51 den Schaftabschnitt 52 in radialer Richtung (quer zur axialen Richtung L) hutartig überragt. Das aus einem metallischen Werkstoff und insbesondere aus einem Stahlwerkstoff gebildete Widerstandsschweißelement 50 ist ähnlich wie ein Hohlstanzniet ausgebildet, d. h. der Schaftabschnitt 52 ist hohl und weist an seiner vorderen Stirnfläche eine umlaufende Stanzkante auf.

Um aus den Bauteilen 20, 21 und 22 einen Vorverbund 30 herzustellen, wird der Stempel 110 entlang der Längsachse L in Richtung der Matrize 120 bewegt und treibt hierbei den Schaftabschnitt 52 des selbststanzenden Widerstandsschweißelements 50 in die Bauteile 22, 21 und 20 ein. Die Bewegung und die vom Stempel 110 erzeugte Fügekraft sind mit dem Pfeil F veranschaulicht. Beim Eintreiben weitet sich der Schaftabschnitt 52 auf und bildet innerhalb der Bauteile 20, 21 und 22 und insbesondere im untersten zweiten Bauteil 20 einen Hinterschnitt, wie in Fig. 1b gezeigt. Das zweite untere Bauteil 20 ist aus einem Werkstoff mit plastischen und insbesondere mit guten plastischen Verformungseigenschaften gebildet. Hierdurch wird das Widerstandsschweißelement 50 mittels seines Schaftabschnitts 52 form- und kraftschlüssig an den Bauteilen 20, 21 und 22 befestigt, wobei die herbeigeführte Befestigung fest und dauerhaft ist. Gleichfalls erzeugt das Widerstandsschweißelement 50 den Zusammenhalt bzw. die Verbindung der Bauteile 20, 21 und 22 innerhalb des Vorverbunds 30. Insofern fungiert das Widerstandsschweißelement 50 auch als Verbindungsniet. Ergänzend können die Bauteile 20, 21 und 22 miteinander verklebt werden. Wie ferner aus Fig. 1b ersichtlich, steht nach dem Eintreiben bzw.

Einstanzen der Kopfabschnitt 51 des Widerstandsschweißelements 50 hervor bzw. steht bezüglich des vierten obersten Bauteils 22 über.

Zur Herstellung eines Bauteilverbunds 40 wird der Vorverbund 30 (oder gegebenenfalls nur das zweite Bauteil 20) anschließend mit einem ersten Bauteil 10 verbunden. Bei dem ersten Bauteil 10 handelt es sich beispielhaft um ein Werkstück aus einem metallischen Werkstoff, beispielsweise aus einem pressgehärteten Stahlblech (bspw. 22MnB5), wobei dieses Bauteil 10 insbesondere auch mit einer metallischen Korrosionsschutzbeschichtung (bspw. FeAlSi-Beschichtung) versehen sein kann. Das erste Bauteil 10 kann auch als Anschlussblech bezeichnet werden.

Das Verbinden des ersten Bauteils 10 mit dem Vorverbund 30 erfolgt derart, dass das erste Bauteil 10 relativ zum Vorverbund 30 positioniert wird, wobei der vorstehende Kopfabschnitt 51 des am Vorverbund 30 befestigten Widerstandsschweißelements 50 dem ersten Bauteil 10 zugewandt ist. Dies ist in Fig. 1c veranschaulicht. Anschließend wird das erste Bauteil 10 durch Widerstandsschweißen mit dem Kopfabschnitt 51 des Widerstandsschweißelements 50 stoffschlüssig verbunden (mit oder ohne vorheriger Beschichtungsentfernung). Das Widerstandsschweißen erfolgt in einer Widerstandsschweißeinrichtung 200, welche zwei Elektroden 210 und 220 umfasst, die an der Fügestelle die Bauteile 10, 22, 21 und 20 (oder gegebenenfalls nur die Bauteile 10 und 20) mit einer Kraft P zusammendrücken und einen Schweißstrom durchleiten. Die Bewegungs- bzw. Kraftachse ist wiederum mit L bezeichnet. Ergänzend kann das erste Bauteil 10 mit dem Deckblech 22 verklebt werden.

Für das Widerstandsschweißen ist es erforderlich, dass das erste Bauteil 10 und das zweite Bauteil 20, die direkt (oder gegebenenfalls auch indirekt) mit den Elektroden 210 und 220 in Kontakt kommen, aus einem elektrisch leitenden Werkstoff und insbesondere aus einem metallischen Werkstoff gebildet sind. Die zwischen dem ersten Bauteil 10 und dem zweiten Bauteil 20 angeordneten Bauteile 21 und 22 können, insofern der Stromfluss durch das Widerstandsschweißelement 50 erfolgen kann, auch aus elektrisch nicht-leitenden Werkstoffen gebildet sein.

Das Widerstandsschweißen erfolgt derart, dass sich zwischen dem ersten Bauteil 10 und dem Kopfabschnitt 51 des Widerstandsschweißelements 50 eine Schweißlinse 60 ausbildet, wie in Fig. 1d gezeigt. Die Schweißlinse 60 befindet sich zwischen den Bauteilen (10 und 22) und ist somit versteckt bzw. nicht sichtbar. Die Fügestelle ist seitens des ersten Bauteils 10 dicht und somit besonders korrosionsbeständig. Da der Schaftabschnitt 52 des Widerstandsschweißelements 50 das unterste bzw. äußerste Bauteil 20 nicht durchdringt ist die Fügestelle auch seitens des zweitens Bauteils 20 dicht und somit besonders korrosionsbeständig.

Das Einbringen des Widerstandsschweißelements 50 in die Bauteile 20, 21 und 22 kann ohne sichtbare Abzeichnung erfolgen. Bevorzugt ist jedoch vorgesehen, dass das Widerstandsschweißelement 50 und die Stanzeinrichtung 100 (insbesondere deren Matrize 120) derart auf die Dicke und die Werkstoffe der Bauteile 20, 21 und 22 abgestimmt sind, dass es beim Einbringen des Schaftabschnitts 52 aufgrund von Deformation (plastische Verformung), insbesondere am unteren zweiten Bauteil 20, zu einer sichtbaren und/oder tastbaren Abzeichnung 31 kommt, wie in Fig. 1b gezeigt. Diese sichtbaren und/oder tastbaren Abzeichnungen 31 können für den nachfolgenden Widerstandsschweißprozess zum Einrichten des Roboters, der die Schweißzange mit den daran befindlichen Elektroden 210 und 220 führt, genutzt werden. Auch beim manuellen Führen einer Schweißzange können diese Abzeichnungen 31 dem ausführenden Werker bei der Auffindung der Fügestellen behilflich sein.

Ein bedeutender Vorteil der Erfindung ist darin zu sehen, dass hinsichtlich der Anzahl zu fügender Bauteile eine hohe Flexibilität besteht. Analog zu den vorausgehenden Erläuterungen können z. B. nur zwei Bauteile (d. h. ein erstes Bauteil 10 und ein zweites Bauteil 20) oder mehr als vier Bauteile miteinander gefügt werden. Ein Vorteil ist auch darin zu sehen, dass das verwendete Widerstandsschweißelement 50 nach dem Widerstandsschweißen nicht mehr sichtbar ist. Auch Abzeichnungen auf den sichtbaren bzw. äußeren Oberflächen des hergestellten Bauteilverbunds 40 können vermieden oder zumindest gering gehalten werden. Ein weiterer Vorteil der Erfindung ist darin zu sehen, dass eine mediendichte Fügestelle ermöglicht wird, wodurch die Verbindung eine sehr gute Korrosionsbeständigkeit aufweist. Ferner ermöglicht die Erfindung das Verbinden hoch- und höchstfester Stahlmaterialien, die technologisch nicht durchstanzt werden dürfen oder können, mit anderen metallischen Werkstoffen und/oder nicht-metallischen Werkstoffen. Weiterhin ist es z. B. möglich, mehrere Blechlagen aus Nicht-Eisen-Metalllegierungen und insbesondere aus unterschiedlichen Nicht-Eisen-Metalllegierungen mit einer Stahl-Blechlage zu verbinden. Die erfindungsgemäß erzeugten Fügeverbindungen zwischen den Bauteilen zeichnen sich durch eine hohe Haltbarkeit aus. Typischerweise entstehen keine kritischen spröden metallischen Phasen. Die eingesetzten bzw. verwendeten Widerstandsschweißelemente sind günstig herstellbar und bereitstellbar. Die Erfindung eignet sich insbesondere auch für Leichtbaulösungen im Kraftfahrzeug-Karosseriebau, vorzugsweise für Personenkraftwagen.

Für das Widerstandsschweißelement 50 sind auch andere (als die gezeigte) Ausführungsformen möglich. Die Ausführungsformen können sich in der Geometrie, im Werkstoff, in der Oberflächenbeschaffenheit und/oder in ihrer Beschichtung unterscheiden. Im Besonderen gilt jedoch, dass die Gestaltung des Schaftabschnitts 52 auf den Einbring-/Einstanzprozess und die Gestaltung des Kopfabschnitts 51 auf den Widerstandsschweißprozess abgestimmt sind.

Sowohl für den Einbring-/Einstanzprozess als auch für den Widerstandsschweißprozess kann auf bekannte Technologien, wie sie in ähnliche Form bereits in breiter Serienanwendung eingesetzt werden, zurückgegriffen werden. Die Kombination von mechanischen Fügetechnologien zur Einbringung des Widerstandsschweißelements mit der Widerstandsschweißtechnologie bietet zudem die Möglichkeit, die bekannten Nachteile beim konventionellen Einbringen der Widerstandsschweißelemente zu vermeiden oder zumindest zu reduzieren.

### Bezugszeichenliste

- 10: erstes Bauteil (oberstes Bauteil)
- 20: zweites Bauteil (unterstes Bauteil)
- 21: drittes Bauteil (Zwischenbauteil)
- 22: viertes Bauteil (Zwischenbauteil)
- 30: Vorverbund
- 31: Abzeichnung
- 40: Bauteilverbund
- 50: Widerstandsschweißelement
- 51: Kopfabschnitt
- 52: Schaftabschnitt
- 60: Schweißlinse
- 100: Stanzeinrichtung
- 110: Stempel
- 120: Matrize
- 200: Widerstandsschweißeinrichtung
- 210: (obere) Elektrode
- 220: (untere) Elektrode
- F: Kraft
- L: Längs-, Bewegungs-, Kraftachse
- P: Presskraft

## Patentansprüche

1. Verfahren zum Fügen von wenigstens zwei Bauteilen (10, 20) mittels wenigstens eines Widerstandsschweißelements (50), umfassend die folgenden Verfahrensschritte:
- Bereitstellen eines ersten Bauteils (10), eines zweiten Bauteils (20) und eines Widerstandsschweißelements (50), wobei das Widerstandsschweißelement (50) einen Schaftabschnitt (52) und einen Kopfabschnitt (51) aufweist;
- Verbinden des Widerstandsschweißelements (50) mit dem zweiten Bauteil (20) durch form- und/oder kraftschlüssiges Befestigen des Schaftabschnitts (52) am zweiten Bauteil (20), sodass nach dem Verbinden der Kopfabschnitt (51) übersteht und der Schaftabschnitt (52) nicht aus dem zweiten Bauteil (20) herausragt; und
- Verbinden des ersten Bauteils (10) mit dem zweiten Bauteil (20), wozu das erste Bauteil (10) zum zweiten Bauteil (20) positioniert wird, derart, dass der überstehende Kopfabschnitt (51) des am zweiten Bauteil (20) befestigten Widerstandsschweißelements (50) dem ersten Bauteil (10) zugewandt ist, und anschließend das erste Bauteil (10) durch Widerstandsschweißen mit dem Kopfabschnitt (51) des Widerstandsschweißelements (50) verbunden wird, wobei sich beim Widerstandsschweißen eine unsichtbare Schweißlinse (60) zwischen den Bauteilen (10, 20) ausbildet.

2. Verfahren nach Anspruch 1,
**dadurch gekennzeichnet, dass**
die Bauteile (10, 20) zumindest im Bereich des Widerstandsschweißelements (50) auch miteinander verklebt werden.

3. Verfahren nach einem der vorausgehenden Ansprüche,
**dadurch gekennzeichnet, dass**
das Widerstandsschweißelement (50) ein selbststanzendes Widerstandsschweißelement ist.

4. Verfahren nach einem der vorausgehenden Ansprüche,
**dadurch gekennzeichnet, dass**
das erste Bauteil (10) aus einem hochfesten und vorzugsweise pressgehärteten Stahlblechmaterial gebildet ist und insbesondere auch eine metallische Korrosionsschutzbeschichtung aufweist.

5. Verfahren nach einem der vorausgehenden Ansprüche,
**dadurch gekennzeichnet, dass**
mehr als zwei Bauteile (10, 20, 21, 22) gefügt werden, wozu zunächst das zweite Bauteil (20) mittels des Widerstandsschweißelements (50) mit wenigstens einem weiteren Bauteil (21, 22) zu einem Vorverbund (30) gefügt wird und nachfolgend das erste Bauteil (10) mit diesem Vorverbund (30) verbunden wird, wozu das erste Bauteil (10) derart zum Vorverbund (30) positioniert wird, dass der Kopfabschnitt (51) des am Vorverbund (30) befestigten Widerstandsschweißelements (50) dem ersten Bauteil (10) zugewandt ist und anschließend das erste Bauteil (10) durch Widerstandsschweißen mit dem Kopfabschnitt (51) des Widerstandsschweißelements (50) verbunden wird.

## Claims

1. A method for joining at least two components (10, 20) by means of at least one resistance welding element (50), comprising the following method steps:
- providing a first component (10), a second component (20) and a resistance welding element (50), wherein the resistance welding element (50) has a shaft section (52) and a head section (51);
- connecting the resistance welding element (50) to the second component (20) by positive and/or non-positive fastening of the shaft section(52) to the second component (20), so that after the connection the head section (51) protrudes and the shaft section(52) does not protrude from the second component (20); and
- connecting the first component (10) to the second component (20), for which purpose the first component (10) is positioned with respect to the second component (20), in such a manner that the protruding head section (51) of the resistance welding element (50) fastened to the second component (20) is facing the first component (10), and subsequently the first component (10) is connected by resistance welding to the head section (51) of the resistance welding element (50), wherein during the resistance welding an invisible weld nugget (60) is formed between the components (10, 20).

2. The method according to Claim 1,
**characterized in that**
the components (10, 20) are also adhesively bonded to each other at least in the area of the resistance welding element (50).

3. The method according to any one of the preceding claims,
**characterized in that**
the resistance welding element (50) is a self-piercing resistance welding element.

4. The method according to any one of the preceding claims,
**characterized in that**
the first component (10) is formed from a high-strength and preferably press-hardened steel sheet material and in particular also has a metallic corrosion protection coating.

5. The method according to the preceding claims,
**characterized in that**
more than two components (10, 20, 21, 22) are joined, for which purpose initially the second component (20) is joined by means of the resistance welding element (50) to at least one further component (21, 22) to form a pre-composite (30) and subsequently the first component (10) is connected to said pre-composite (30), for which reason the first component (10) is positioned with respect to the pre-composite (30) in such a manner that the head section (51) of the resistance welding element (50) fastened to the pre-composite (30) is facing the first component (10) and subsequently the first component (10) is connected by resistance welding to the head section (51) of the resistance welding element (50).

## Revendications

1. Procédé de jonction d'au moins deux composants (10, 20) au moyen d'au moins un élément de soudure par résistance (50), comprenant les étapes suivantes :
- préparation d'un premier composant (10), d'un deuxième composant (20) et d'un élément de soudure par résistance (50), l'élément de soudure par résistance (50) comprenant une portion de tige (52) et une portion de tête (51) ;
- liaison de l'élément de soudure par résistance (50) avec le deuxième composant (20) par fixation par complémentarité de forme et/ou par force de la portion de tige (52) sur le deuxième composant (20), de façon à ce que, après la liaison, la portion de tête (51) soit en surplomb et la portion de tige (52) ne dépasse pas du deuxième composant (20) ; et
- liaison du premier composant (10) avec le deuxième composant (20), le premier composant (10) étant pour cela positionné par rapport au deuxième composant (20) de façon à ce que la portion de tête (51) en surplomb de l'élément de soudure par résistance (50) fixé au deuxième composant (20) soit orientée vers le premier composant (10) puis le premier composant (10) est relié par soudure par résistance avec la portion de tête (51) de l'élément de soudure par résistance (50), une ligne de soudure invisible (60) se formant entre les composants (10, 20) lors de la soudure par résistance.

2. Procédé selon la revendication 1,
**caractérisé en ce que**
les composants (10, 20) sont également collés ensemble au moins au niveau de l'élément de soudure par résistance (50).

3. Procédé selon l'une des revendications précédentes,
**caractérisé en ce que**
l'élément de soudure par résistance (50) est un élément de soudure par résistance auto-poinçonneur.

4. Procédé selon l'une des revendications précédentes,
**caractérisé en ce que**
le premier composant (10) est constitué d'un matériau en tôle d'acier hautement résistant et de préférence durci à la presse et comprend plus particulièrement également un revêtement protecteur anti-corrosion.

5. Procédé selon l'une des revendications précédentes,
**caractérisé en ce que**
plus de deux composants (10, 20, 21, 22) sont assemblés, le deuxième composant (20) étant pour cela d'abord joint, au moyen de l'élément de soudure par résistance (50), avec au moins un autre composant (21, 22) afin d'obtenir un pré-composite (30) puis le premier composant (10) est relié avec ce pré-composite (30), le premier composant (10) étant pour cela positionné par rapport au pré-composite (30) de façon à ce que la portion de tête (51) de l'élément de soudure par résistance (50) fixé au pré-composite (30) soit orientée vers le premier composant (10) puis le premier composant (10) est relié par soudure par résistance avec la portion de tête (51) de l'élément de soudure par résistance (50).
